# EUROPEAN PATENT SPECIFICATION

(11) **EP 3 264 049 B1**
(45) Date of publication and mention of the grant of the patent: **12.12.2018**
(21) Application number: 16192378.4
(22) Date of filing: 05.10.2016
(51) Int. Cl.: G01D 15/20

(54) **CURRENT SENSOR**
STROMSENSOR
CAPTEUR DE COURANT

(30) Priority: 01.07.2016 JP 2016131618
(43) Date of publication of application: 03.01.2018
(73) Proprietor: Alps Electric Co., Ltd., Tokyo, 145-8501 (JP)
(72) Inventor: HEBIGUCHI, Hiroyuki, Tokyo 145-8501 (JP)
(74) Representative: Schmitt-Nilson Schraud Waibel Wohlfrom Patentanwälte Partnerschaft mbB

(56) References cited:
- US-A- 5 694 103
- US-A1- 2006 255 793
- US-A1- 2008 048 642
- US-A1- 2008 231 255

## Description

### BACKGROUND OF THE INVENTION

### 1. Field of the Invention

The present invention relates to a current sensor.

### 2. Description of the Related Art

To date, a current sensor has been known that includes a plurality of bus bars (i.e., current paths) adjacent to one another, a plurality of C-shaped magnetic bodies surrounding the plurality of bus bars, and magneto-sensitive devices (i.e., magnetic sensors) for detecting magnetic fields generated by current in the bus bars respectively arranged in the magnetic bodies, as illustrated in Japanese Unexamined Patent Application Publication No. 2014-006116. The magnetic bodies surrounding the bus bars may be U-shaped as illustrated in Japanese Unexamined Patent Application Publication No. 2015-172531.

However, in the current sensor disclosed in Japanese Unexamined Patent Application Publication No. 2014-006116, magnetic fields in the sensitivity direction are generated near each magnetic sensor by other current paths (also called adjacent current paths) that are not the current paths to be measured. This results in disadvantage in that magnetic fields generated by current paths to be measured cannot be detected accurately.

US2008/231255 discloses another current sensor for three current paths based on the same principle, whereby cross-talk between the current paths and their respective measures are reduced using post-processing of the output signals.

The present invention was realized in view of such a circumstance, and provides a current sensor that can enhance the accuracy in detecting a current to be measured by causing a magnetic field due to the current of an adjacent current path, which is not an object to be measured, to be unlikely to be detected by a magnetic sensor.

### SUMMARY OF THE INVENTION

The present invention is a current sensor including: a current path through which a current flows in a first direction; an adjacent current path arranged in such a manner as to be adjacent to the current path; a first magnetic sensor detecting a magnetic field due to the current flowing through the current path; and a first yoke having a sectional shape partially surrounding a periphery of the current path in a first virtual plane perpendicular to the first direction. The first yoke includes a gap delimited by two end surfaces parallel to each other. Two end edges spaced furthest apart from the current path at the two end surfaces are located in a common second virtual plane perpendicular to the two end surfaces. The first magnetic sensor is arranged in the gap and has a sensitivity direction parallel to the second virtual plane. The adjacent current path is arranged in the second virtual plane.

According to this configuration, the two end surfaces oriented in the first direction and parallel to each other delimit the gap in the first yoke surrounding the current path. The two end edges most spaced apart from the current path at the two end surfaces, together with the adjacent current path are located in the common second virtual plane perpendicular to the two end surfaces. When a current flows through the adjacent current path, ring-shaped magnetic lines of flux are generated in a first virtual plane in an area surrounding the adjacent current path. These magnetic lines of flux, since the adjacent current path is located in the second virtual plane, are likely to cross the second virtual plane at an angle near a right angle. In other words, these magnetic lines of flux are likely to cross the second virtual plane at an angle near a right angle between the two end edges. As a result, in the first magnetic sensor arranged in the gap, an induced magnetic field due to a current of the adjacent current path becomes perpendicular to the second virtual plane. As a result, in the first magnetic sensor, the component in the sensitivity direction of an induced magnetic field due to a current of the adjacent current path becomes small. Hence, the induced magnetic field due to the current of the adjacent current path is unlikely to be detected by the first magnetic sensor, whereby current detection accuracy is increased.

Preferably, in the current sensor of the present invention, the first magnetic sensor is arranged in a middle of the gap in such a manner as to be located at the same distance from the two end surfaces in the first virtual plane.

Preferably, in the current sensor of the present invention, a current flows through the adjacent current path in the first direction.

Preferably, in the current sensor of the present invention, the adjacent current path has a line-symmetric sectional shape in the first virtual plane and an axis of symmetry of the sectional shape is included in the second virtual plane.

According to this configuration, since the adjacent current path has a line-symmetric sectional shape in the first virtual plane, the direction of the magnetic field in the first virtual plane due to a current flowing through the adjacent current path becomes substantially perpendicular to the axis of symmetry, on the axis of symmetry of the sectional shape. Further, since the axis of symmetry is included in the second virtual plane, the direction of the magnetic field due to the current flowing through the adjacent current path becomes substantially perpendicular to the second virtual plane. As a result, an induced magnetic field generated in the gap due to the current flowing through the adjacent current path is substantially orthogonal to the sensitivity direction of the first magnetic sensor. Hence, the induced magnetic field due to the current of the adjacent current path becomes unlikely to be detected by the first magnetic sensor.

Preferably, in the current sensor according to the present invention, the sectional shape of the first yoke is a ring cut out at the gap.

Preferably, in the current sensor of the present invention, the first yoke includes two plate-shaped arm portions extending parallel to each other with the current path sandwiched therebetween and a connection portion connecting respective first ends of the two arm portions to each other. The two arm portions respectively form the end surfaces, on sides thereof facing the current path, and the connection portion forms a bottom surface perpendicular to the end surfaces, on a side thereof facing the current path.

Preferably, in the current sensor of the present invention, the current path, in the first virtual plane, has a flat sectional shape extending in a second direction perpendicular to the end surface of the gap, and a position of a center, in the second direction, of the sectional shape of the current path is displaced from a position, in the second direction, of the first magnetic sensor.

According to this configuration, since the position of the center, in the second direction, of the current path having a flat sectional shape extending in the second direction is displaced from the position, in the second direction, of the first magnetic sensor, compared with the case where these positions in the second direction are the same, influence of a skin effect is suppressed and the frequency characteristics are enhanced.

Preferably, the current sensor of the present invention further includes: a second magnetic sensor detecting a magnetic field due to the current flowing through the adjacent current path; and a second yoke having a sectional shape partially surrounding a periphery of the adjacent current path. Preferably, the second yoke includes a gap delimited by two end surfaces parallel to each other, and two end edges most spaced apart from the second current path at the two end surfaces of the second yoke are located in the second virtual plane. Preferably, the second magnetic sensor is arranged in the gap and has a sensitivity direction parallel to the second virtual plane, and the second magnetic sensor and the second yoke are displaced in the first direction from the first magnetic sensor and the first yoke. Preferably, at positions adjacent to the second magnetic sensor and the second yoke, the current path and the adjacent current path curve such that the current path is arranged in the second virtual plane.

According to this configuration, in the second magnetic sensor, an induced magnetic field due to the current of a current path becomes unlikely to be detected and, hence, the current detection accuracy is enhanced. Further, since the second magnetic sensor and the second yoke are located at locations displaced in the first direction from locations at which the first magnetic sensor and the first yoke are located, it becomes easy to arrange the current path and the adjacent current path close to each other.

According to the present invention, by making a magnetic field due to the current of an adjacent current path which is not a current to be measured be unlikely to be detected by a magnetic sensor, accuracy in detecting a current to be measured is increased.

### BRIEF DESCRIPTION OF THE DRAWINGS

Fig. 1 is a partial perspective view of a current sensor of a first embodiment of the present invention;
Fig. 2 is a partial side view of the current sensor illustrated in Fig. 1;
Fig. 3 is a sectional view of the current sensor taken along line III-III in Fig. 2;
Fig. 4 is a diagram illustrating magnetic lines of flux generated by a current flowing through a second current path illustrated in Fig. 1;
Fig. 5 is a diagram illustrating the magnetic lines of flux of a comparative example of a first embodiment, generated by a current flowing through a second current path;
Fig. 6 is a partial sectional view of a modification of a first detection unit of the first embodiment;
Fig. 7 is a partial perspective view of a current sensor of a second embodiment of the present invention;
Fig. 8 is a partial side view of the current sensor illustrated in Fig. 7;
Fig. 9 is a sectional view of the current sensor taken along line IX-IX in Fig. 8;
Fig. 10 is a diagram illustrating magnetic lines of flux generated by a current flowing through a second current path illustrated in Fig. 7;
Fig. 11 is a diagram illustrating magnetic lines of flux generated by a current flowing through a second current path of a comparative example of the second embodiment;
Fig. 12 is a graph illustrating the relationship between the position of an adjacent current path and influence from the adjacent current path; and
Fig. 13 is a perspective view of a current sensor of a third embodiment.

### DESCRIPTION OF THE PREFERRED EMBODIMENTS

### First embodiment

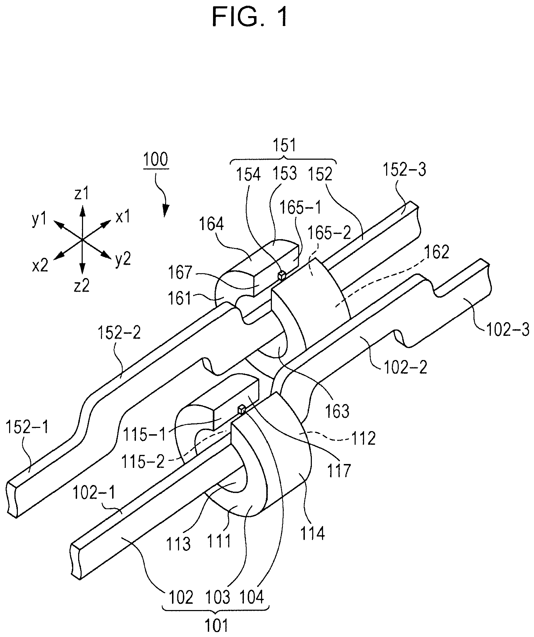

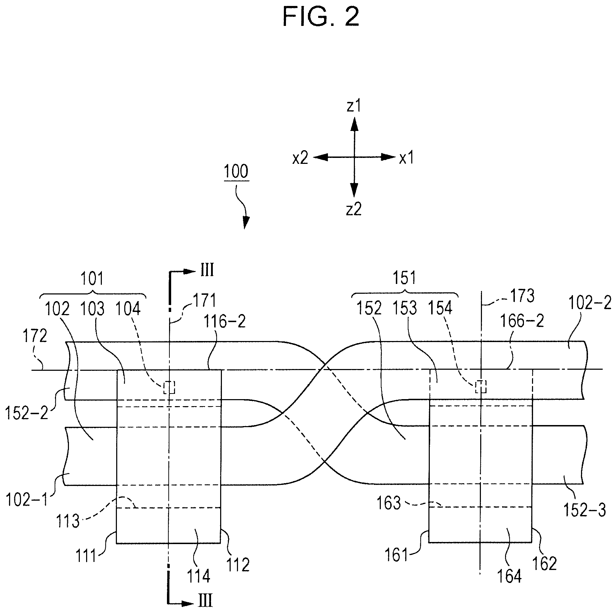

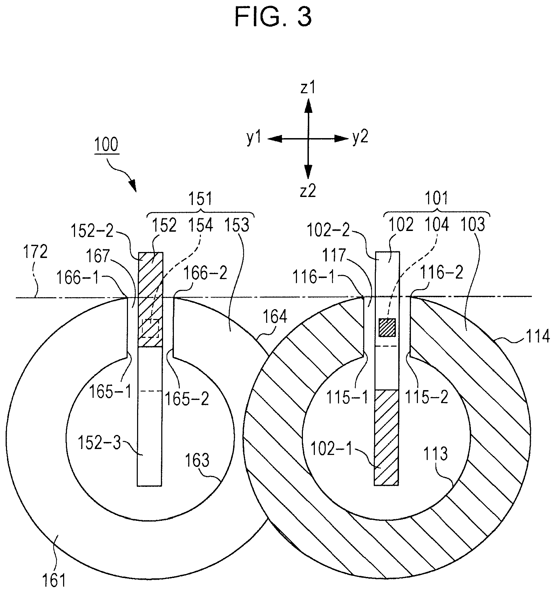

Hereinafter, a current sensor according to a first embodiment of the present invention will be described. Fig. 1 is a perspective view of a current sensor 100 of the first embodiment. Fig. 2 is a partial side view of the current sensor 100 illustrated in Fig. 1. Fig. 3 is a sectional view (parallel to the yz plane) of the current sensor 100 taken along line III-III in Fig. 2.

In the present specifications, the x direction, the y direction, and the z direction orthogonal to one another are specified. The x direction is shown without distinguishing between the x1 direction and the x2 direction opposite to each other. The y direction is shown without distinguishing between the y1 direction and the y2 direction opposite to each other. The z direction is shown without distinguishing between the z1 direction and the z2 direction opposite to each other. These directions are specified for convenience of explaining relative positional relationships and do not limit the directions at the time of actual usage. The shapes of configuration components, even if not described as "substantially", are not limited to the strict geometric shapes based on the expression in the description, as long as the technical idea of the embodiments disclosed in the present specifications is realized.

### Entire Configuration

As illustrated in Fig. 1, the current sensor 100 includes a first detection unit 101 and a second detection unit 151.

### First detection unit

The first detection unit 101 includes a first current path 102 formed of a conductor, a first yoke 103 formed of a magnetic body, and a first magnetic sensor 104 formed of a magneto-electric conversion device such as a magneto-resistance effect device and a Hall device. The first magnetic sensor 104 arranged within the first yoke 103 detects the amount of a current flowing through the first current path 102 arranged within the first yoke 103.

### First current path

The first current path 102 is a long plate member having flat surfaces in the xz plane and allows a current to pass therethrough substantially in the x direction. As illustrated in Fig. 3, the section of the first current path 102 in the yz plane has a substantially rectangular shape with its sides extending in the γ-direction and z-direction. The width in the γ-direction of the first current path 102 is smaller than the width in the z-direction.

As illustrated in Fig. 1, the first current path 102 includes a first region 102-1, a second region 102-2, and a third region 102-3. The first region 102-1 to the third region 102-3 are arranged in the x1 direction in the order of the last digit of the reference numeral, and all extend substantially in the x direction. The x1-side end portion of the first region 102-1 is connected to the x2-side end portion of the second region 102-2. The x1-side end portion of the second region 102-2 is connected to the x2-side end portion of the third region 102-3. The second region 102-2 is located so as to be displaced from the first region 102-1 and the third region 102-3 in the z1 direction.

### First yoke

As illustrated in Fig. 1, the first yoke 103 includes a C-shaped front surface 111 extending in the yz plane and has an opening facing the z1 side, and a C-shaped back surface 112 extending in the yz plane and has an opening facing the z1 side. The back surface 112 has a shape which is obtained by shifting the front surface 111 in the x1 direction. As illustrated in Fig. 2, the first yoke 103 extends in the x direction between the front surface 111 and the back surface 112, and as illustrated in Fig. 3, a section in the yz plane at any position in the x direction is the same as the front surface 111 illustrated in Fig. 1.

The first yoke 103 has a sectional shape partially surrounding the periphery of the first current path 102 as illustrated in Fig. 3, in a first virtual plane 171 perpendicular to the x direction illustrated in Fig. 2. The first yoke 103 has a shape symmetrical about a plane parallel to the xz plane. The first yoke 103 includes a substantially cylindrical inner surface 113 which extends in the x direction in the inside and a substantially cylindrical outer surface 114 extending in the x direction on the outside. The centers of sections in the yz plane of the inner surface 113 and the outer surface 114 are substantially the same. The width of the first yoke 103 in the radial direction from the center is substantially constant.

As illustrated in Fig. 3, the first yoke 103 includes a first end surface 115-1 and a second end surface 115-2 facing each other in a portion corresponding to the opening of the C shape. The first end surface 115-1 and the second end surface 115-2 are parallel to the xz plane. The first end surface 115-1 is located on the y1 side of the second end surface 115-2. As illustrated in Fig. 1, the shapes of the first end surface 115-1 and the second end surface 115-2 are substantially rectangular shapes surrounded by the front surface 111, the back surface 112, the inner surface 113, and the outer surface 114.

As illustrated in Fig. 3, the first end surface 115-1 includes a first end edge 116-1 located at a position in the first yoke 103 furthest in the z1 direction. The second end surface 115-2 includes a second end edge 116-2 located at a position in the first yoke 103 furthest in the z1 direction. The first end edge 116-1 and the second end edge 116-2 are both oriented in the x direction. The first end edge 116-1 and the second end edge 116-2, in the first end surface 115-1 and the second end surface 115-2, are furthest from the first current path 102 in the z direction (direction perpendicular to the x direction).

As illustrated in Fig. 3, the first yoke 103 includes a gap 117 delimited by the first end surface 115-1 and the second end surface 115-2. The sectional shape of the first yoke 103 is a ring cut out at the gap 117. The first end edge 116-1 and the second end edge 116-2 are located in a common second virtual plane 172 perpendicular to the first end surface 115-1 and the second end surface 115-2. The second virtual plane 172 is oriented in the x direction and the y direction.

### First magnetic sensor

As illustrated in Fig. 3, the first magnetic sensor 104 is arranged in the middle, in the y direction, of the gap 117 located at the same distance from the first end surface 115-1 and the second end surface 115-2 in a plane (that is, the first virtual plane 171 in Fig. 2) along the section of Fig. 3. The first magnetic sensor 104 has a sensitivity direction parallel to the second virtual plane 172 (that is, in the xy plane). The first magnetic sensor 104 detects a magnetic field in a sensitivity direction due to a current flowing through the first current path 102. The sensitivity of the first magnetic sensor 104 for the current flowing through the first current path 102 becomes maximum when the sensitivity direction is the y direction. In the present embodiment, it is assumed that the first magnetic sensor 104 has a sensitivity direction corresponding to the y direction, as an example.

### Second detection unit

As illustrated in Fig. 1, the second detection unit 151 includes a second current path 152, a second yoke 153, and a second magnetic sensor 154. The second magnetic sensor 154 arranged within the second yoke 153 detects the amount of a current flowing through the second current path 152 arranged within the second yoke 153.

### Second current path

The second current path 152 is a long plate member having flat surfaces in the xz plane and allows a current to pass therethrough substantially in the x direction. As illustrated in Fig. 3, the section of the second current path 152 in the yz plane has a substantially rectangular shape with its sides extending in the γ-direction and z-direction.

As illustrated in Fig. 1, the second current path 152 includes a first region 152-1, a second region 152-2, and a third region 152-3. The first region 152-1 to the third region 152-3 are arranged in the x1 direction in this order, i.e, in the order of the last digit of the reference numeral, and all extend substantially in the x direction. The x1-side end portion of the first region 152-1 is connected to the x2-side end portion of the second region 152-2. The x1-side end portion of the second region 152-2 is connected to the x2-side end portion of the third region 152-3. The second region 152-2 is displaced from the first region 152-1 and the third region 152-3 in the z1 direction.

As illustrated in Fig. 1, the second region 152-2 of the second current path 152 is displaced in the x2 direction from the second region 102-2 of the first current path 102. As illustrated in Fig. 3, when only the position in the z direction is noted, the second region 152-2 of the second current path 152 and the second region 102-2 of the first current path 102 are located at the same position. As illustrated in Fig. 1, when only the position in the z-direction is noted, the first region 152-1 and the third region 152-3 of the second current path 152 are located at the same position as the first region 102-1 and the third region 102-3 of the first current path 102.

### Second yoke

As illustrated in Fig. 1, the shape of the second yoke 153 is the same shape as the shape of the first yoke 103. A front surface 161, a back surface 162, an inner surface 163, an outer surface 164, a first end surface 165-1, a second end surface 165-2, a first end edge 166-1, a second end edge 166-2, and a gap 167 of the second yoke 153 respectively correspond to the front surface 111, the back surface 112, the inner surface 113, the outer surface 114, the first end surface 115-1, the second end surface 115-2, the first end edge 116-1, the second end edge 116-2, and the gap 117 of the first yoke 103. The second yoke 153 is located at a position corresponding to the location of the first yoke 103 shifted in the xy plane.

### Second magnetic sensor

As illustrated in Fig. 3, the first magnetic sensor 154 is arranged in the middle, in the y direction, of the gap 167 located at the same distance from the first end surface 165-1 and the second end surface 165-2 in a plane (that is, a first virtual plane 173 in Fig. 2) parallel to the yz plane. The second magnetic sensor 154 has a sensitivity direction parallel to the second virtual plane 172 (that is, in the xy plane). The second magnetic sensor 154 detects a magnetic field in a sensitivity direction due to a current flowing through the second current path 152. The sensitivity of the second magnetic sensor 154 for the current flowing through the second current path 152 becomes maximum when the sensitivity direction is the y direction. In the present embodiment, it is assumed that the second magnetic sensor 154 has a sensitivity direction corresponding to the y direction, as an example.

The first virtual plane 173 of the second detection unit 151 illustrated in Fig. 2 corresponds to the first virtual plane 171 of the first detection unit 101, and is a plane parallel to the yz plane passing through the second current path 152, the second magnetic sensor 154, and the second yoke 153.

### Positional relationship

As illustrated in Fig. 1, the relative positional relationship among the third region 152-3 of the second current path 152, the second yoke 153, and the second magnetic sensor 154 is the same as the relative positional relationship among the first region 102-1 of the first current path 102, the first yoke 103, and the first magnetic sensor 104. The positions in the x direction of the first magnetic sensor 104 and the first yoke 103 included in the first detection unit 101 are displaced in the x direction with respect to those of the second magnetic sensor 154 and the second yoke 153 included in the second detection unit 151. As illustrated in Fig. 3, the first end edge 166-1 and the second end edge 166-2 of the second current path 152 are located in the second virtual plane 172 similarly to the first end edge 116-1 and the second end edge 116-2 of the first current path 102.

The second region 152-2 of the second current path 152 included in the second detection unit 151 is also called an adjacent current path for the first region 102-1 of the first current path 102 included in the first detection unit 101. The second region 152-2 of the second current path 152 is adjacent to the first region 102-1 of the first current path 102, and allows a current to flow therethrough in the x direction. The second region 102-2 of the first current path 102 included in the first detection unit 101 is also called an adjacent current path for the third region 152-3 of the second current path 152 included in the second detection unit 151. The second region 102-2 of the first current path 102 is adjacent to the third region 152-3 of the second current path 152, and allows a current to flow therethrough in the x direction.

As illustrated in Fig. 2, the adjacent current paths (the second region 152-2 of the second current path 152 and the second region 102-2 of the first current path 102) are arranged in the second virtual plane 172. The second region 152-2 of the second current path 152 as an adjacent current path has, in the first virtual plane 171, a line-symmetric rectangular sectional shape similarly to the section of the second current path 152 illustrated in Fig. 3. The second region 102-2 of the first current path 102 as an adjacent current path has, in the first virtual plane 173, a line-symmetric rectangular sectional shape similarly to the section of the first current path 102 illustrated in Fig. 3. In either of the cases, the axis of symmetry of the sectional shape (rectangle) of the adjacent current path is included in the second virtual plane 172.

### Magnetic lines of flux in first embodiment

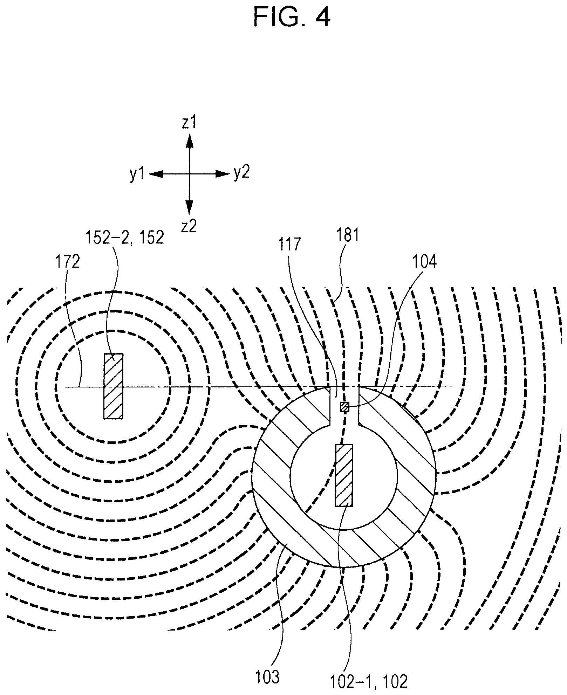

Fig. 4 is a diagram illustrating magnetic lines of flux in the first virtual plane 171 (Fig. 2) generated by a current flowing through the second region 152-2 of the second current path 152 as an adjacent current path. The magnetic lines of flux are illustrated using dotted lines. As has been described with reference to Fig. 3, the first end edge 116-1 and the second end edge 116-2 of the first current path 102 and the center, in the z direction, of the second region 152-2 of the second current path 152 are located in the second virtual plane 172.

As a result, the magnetic lines of flux illustrated in Fig. 4, within the gap 117, pass through the center, in the y direction, of the gap 117 and are substantially symmetric about a plane parallel to the xz plane. As illustrated by magnetic lines of flux 181, the magnetic lines of flux are oriented substantially in the z direction near the center, in the y direction, within the gap 117. In other words, the magnetic lines of flux near the first magnetic sensor 104 are oriented in a direction (z direction) substantially perpendicular to the sensitivity direction (y direction) of the first magnetic sensor 104. Hence, the first magnetic sensor 104 is unlikely to be influenced by a magnetic field due to an adjacent current path.

The relationship between the second detection unit 151 and the magnetic lines of flux generated by a current flowing through the second region 102-2 of the first current path 102 as an adjacent current path illustrated in Fig. 1 is similar to the relationship between the first detection unit 101 and the magnetic lines of flux generated by a current flowing through the second region 152-2 of the second current path 152.

### Magnetic lines of flux in comparative example of first embodiment

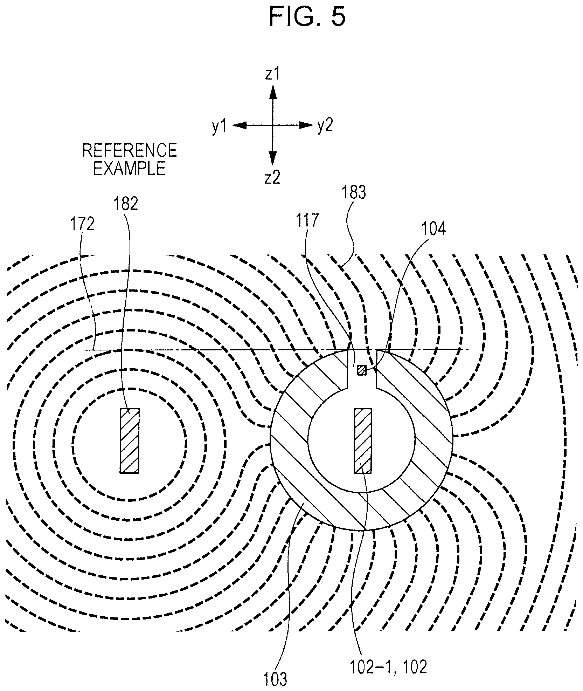

Fig. 5 is a diagram illustrating the magnetic lines of flux of a comparative example, generated in the first virtual plane 171 (Fig. 2) by a current flowing through an adjacent current path 182 obtained by shifting the second region 152-2 of the second current path 152 illustrated in Fig. 4 in the z2 direction. The magnetic lines of flux are represented using dotted lines. The adjacent current path 182 is displaced in the z2 direction from the second virtual plane 172.

As a result, within the gap 117, the magnetic lines of flux are not symmetric about a plane that is parallel to the xz plane and that passes through the center, in the y direction, of the gap 117. As illustrated by magnetic lines of flux 183, the magnetic lines of flux are not oriented in the z direction near the center, in the y direction, within the gap 117. In other words, magnetic lines of flux near the first magnetic sensor 104 are not substantially perpendicular to the sensitivity direction (y direction) of the first magnetic sensor 104. Hence, the first magnetic sensor 104 of the comparative example is likely to receive the influence of a magnetic field due to the adjacent current path, unlike the present embodiment.

### Summary

As described above, according to the present embodiment, when a current flows in the x direction through an adjacent current path (the second region 152-2 of the second current path 152, the second region 102-2 of the first current path 102), ring-shaped magnetic lines of flux are generated in a first virtual plane (171, 173) in an area surrounding the adjacent current path. These magnetic lines of flux, since the adjacent current paths are located in the second virtual plane 172, are likely to cross the second virtual plane 172 at an angle near a right angle. In other words, these magnetic lines of flux are likely to cross the second virtual plane 172 at an angle near a right angle between the two end edges (between the first end edge 116-1 and the second end edge 116-2, between the first end edge 166-1 and the second end edge 166-2). As a result, in magnetic sensors (104, 154), arranged in the middle of the respective gaps (117, 167), each being located at the same distance from the two end surfaces (distance from the first end surface 115-1 and the second end surface 115-2, distance from the first end surface 165-1 and the second end surface 165-2), induced magnetic fields due to respective currents of adjacent current paths become nearly perpendicular to the second virtual plane 172. As a result, in each of the magnetic sensors (104, 154), the component in the sensitivity direction of an induced magnetic field due to a current of an adjacent current path becomes small. Consequently, an induced magnetic field due to the current of an adjacent current path is unlikely to be detected by a magnetic sensor (104, 154) and, hence, current detection accuracy is increased.

According to the present embodiment, since an adjacent current path has a line-symmetric sectional shape in the first virtual plane (171, 173), the direction of a magnetic field, due to a current flowing through an adjacent current path, in the first virtual plane (171, 173) becomes substantially perpendicular to the axis of symmetry of the sectional shape on the axis of symmetry. Since this axis of symmetry is included in the second virtual plane 172, a magnetic field due to a current flowing through the adjacent current path becomes substantially perpendicular to the second virtual plane 172. Hence, an induced magnetic field generated in the gap (117, 167) by a current flowing through the adjacent current path is substantially orthogonal to the sensitivity direction of the magnetic sensor (104, 154). As a result, an induced magnetic field due to a current of an adjacent current path is unlikely to be detected by the magnetic sensor (104, 154).

According to the present embodiment, in each of the first magnetic sensor 104 and the second magnetic sensor 154 detecting the respective magnetic fields due to currents flowing through the first current path 102 and the second current path 152, an induced magnetic field due to a current of an adjacent current path becomes unlikely to be detected and, hence, the current detection accuracy is enhanced. Since the first magnetic sensor 104 and the first yoke 103 included in the first detection unit 101 are located at locations displaced in the x direction from locations at which the second magnetic sensor 154 and the second yoke 153 included in the second detection unit 151 are located, it becomes easy to arrange the first current path 102 and the second current path 152 close to each other.

### Modification

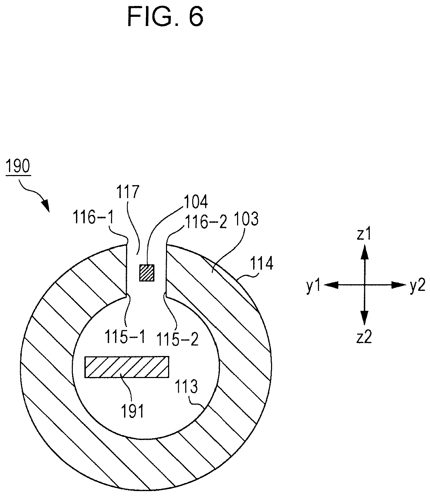

Fig. 6 is a sectional view of a first detection unit 190 according to a modification of the first embodiment. A first current path 191 of the first detection unit 190 in the modification is different from the first current path 102 of the first detection unit 101 of the first embodiment illustrated in Fig. 1 in terms of a shape and a location.

A section of the first current path 191 parallel to the yz plane is a rectangle having sides in the y direction and z direction, and the width in the y direction is larger than the width in the z direction. Hence, in a first virtual plane (i.e., a plane along the section in Fig. 6), the first current path 191 has a sectional shape which extends flat in the y direction perpendicular to the first end surface 115-1 and the second end surface 115-2 of the gap 117. Further, the position of the center, in the y direction, of the sectional shape of the first current path 191 is displaced from the position, in the y direction, of the first magnetic sensor 104.

According to the present embodiment, since the position of the center, in the y direction, of the first current path 191 having a flat sectional shape extending in the y direction is displaced from the position, in the y direction, of the first magnetic sensor 104. Hence, compared with the case where these positions in the y direction are the same, the influence of a skin effect is suppressed and the frequency characteristics are enhanced. Note that also the second detection unit 151 in Fig. 1 may have a shape and a configuration similar to those of the first detection unit 190 of the modification.

### Second embodiment

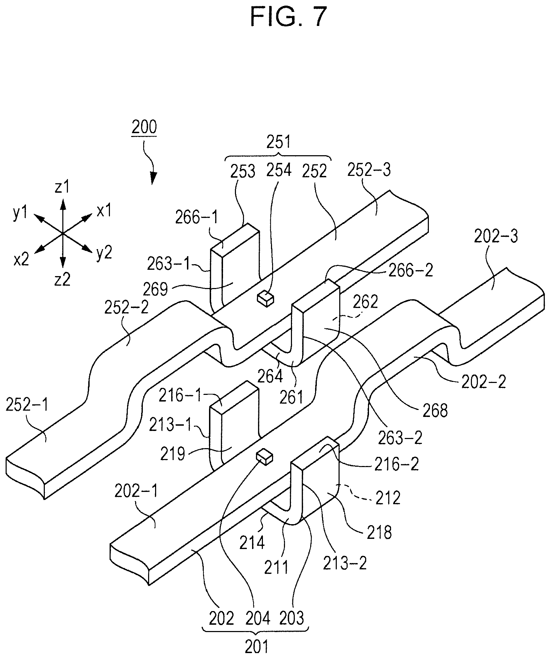

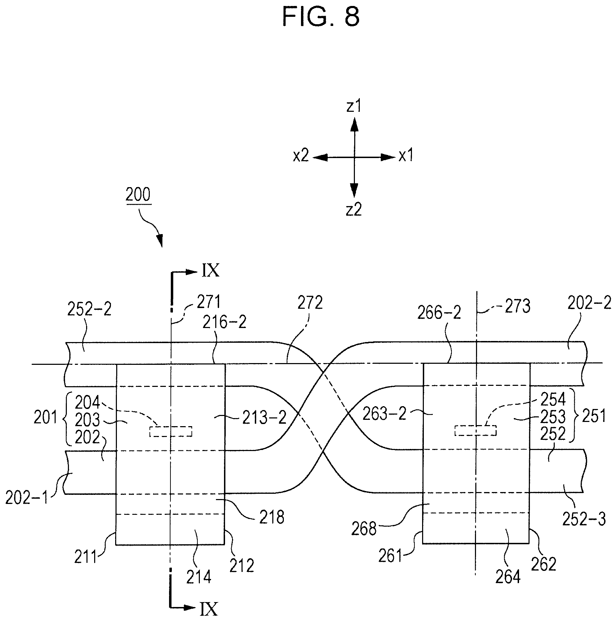

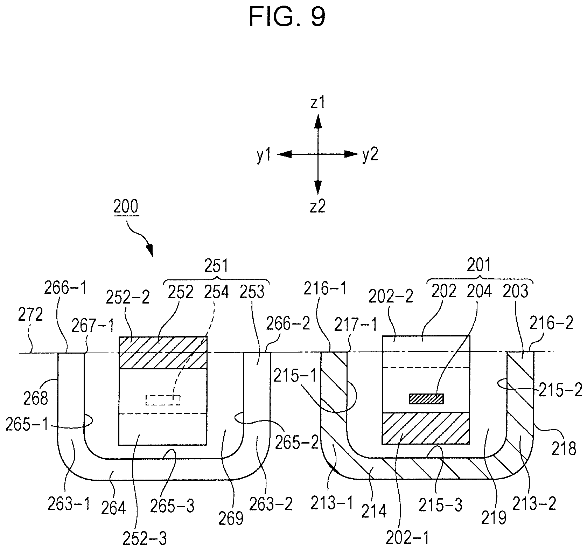

Hereinafter, a current sensor according to a second embodiment of the present invention will be described. Fig. 7 is a perspective view of a current sensor 200 of the second embodiment. Fig. 8 is a partial side view of the current sensor 200 illustrated in Fig. 7. Fig. 9 is a sectional view of the current sensor 200 taken along line IX-IX in Fig. 8.

### Entire configuration

As illustrated in Fig. 7, the current sensor 200 includes a first detection unit 201 and a second detection unit 251.

### First detection unit

The first detection unit 201 includes a first current path 202 formed of a conductor, a first yoke 203 formed of a magnetic body, and a first magnetic sensor 204 formed of a magneto-electric conversion device such as a magneto-resistance effect device and a Hall device. The first magnetic sensor 204 arranged within the first yoke 203 detects the amount of a current flowing through the first current path 202 arranged within the first yoke 203.

### First current path

The first current path 202 is a long plate member having flat surfaces in the xy plane and allows a current to pass therethrough substantially in the x direction. As illustrated in Fig. 9, the section of the first current path 202 in the yz plane has a substantially rectangular shape with its sides extending in the γ-direction and z-direction. The width, in the y-direction, of the first current path 202 is larger than the width in the z-direction.

As illustrated in Fig. 7, the first current path 202 includes a first region 202-1, a second region 202-2, and a third region 202-3. The first region 202-1 to the third region 202-3 are arranged in the x1 direction in this order, i.e, in the order of the last digit of the reference numeral, and all extend substantially in the x direction. The x1-side end portion of the first region 202-1 is connected to the x2-side end portion of the second region 202-2. The x1-side end portion of the second region 202-2 is connected to the x2-side end portion of the third region 202-3. The second region 202-2 is located so as to be displaced from the first region 202-1 and the third region 202-3 in the z1 direction.

### First yoke

As illustrated in Fig. 7, the first yoke 203 includes a U-shaped front surface 211 extending in the yz plane and has an opening facing the z1 side, and a U-shaped back surface 212 extending in the yz plane and has an opening facing the z1 side. The back surface 212 has a shape which is obtained by shifting the front surface 211 in the x1 direction. As illustrated in Fig. 8, the first yoke 203 extends in the x direction between the front surface 211 and the back surface 212, and as illustrated in Fig. 9, a section in the yz plane at any position in the x direction is the same as the front surface 211.

The first yoke 203, in a first virtual plane 271 perpendicular to the x-direction illustrated in Fig. 8, has a sectional shape that partially surrounds the periphery of the first current path 202 as illustrated in Fig. 9. The first yoke 203 has a shape symmetrical about a plane parallel to the xz plane. The first yoke 203 includes a plate-shaped first arm portion 213-1 and a plate-shaped second arm portion 213-2 that extend parallel to each other with the first current path 202 therebetween, and further includes a connection portion 214 that connects the first arm portion 213-1 and the second arm portion 213-2 to each other.

The first arm portion 213-1 is located on the y1 side of the first current path 202, and includes a first end surface 215-1 parallel to the xz plane on the side thereof facing the first current path 202. The first end surface 215-1 includes a first end edge 217-1 located furthest in the z1 direction. The first arm portion 213-1 includes a first upper surface 216-1 parallel to the xy plane, located furthest in the z1 direction. The first end edge 217-1, which is a boundary between the first end surface 215-1 and the first upper surface 216-1, extends in the x direction. In the first end surface 215-1, the first end edge 217-1 is most spaced apart from the first current path 202 in the z direction (direction perpendicular to the x direction).

The second arm portion 213-2 is located on the y2 side of the first current path 202, and includes a second end surface 215-2 parallel to the xz plane on the side thereof facing the first current path 202. The second end surface 215-2 includes a second end edge 217-2 located furthest in the z1 direction. The second arm portion 213-2 includes a second upper surface 216-2 parallel to the xy plane, located furthest in the z1 direction. The second end edge 217-2, which is a boundary between the second end surface 215-2 and the second upper surface 216-2, extends in the x direction. In the second end surface 215-2, the second end edge 217-2 is most spaced apart from the first current path 202 in the z direction (direction perpendicular to the x direction).

The connection portion 214 connects the z2-side end portion of the first arm portion 213-1 to the z2-side end portion of the second arm portion 213-2. The connection portion 214 includes, on the side facing the first current path 202, a bottom surface 215-3 perpendicular to both the first end surface 215-1 and the second end surface 215-2 (i.e., parallel to the xy plane).

As illustrated in Fig. 9, the first end surface 215-1, the second end surface 215-2, and a bottom surface 215-3 form a substantially U-shaped section inside the first yoke 203. The first yoke 203 includes a substantially U-shaped external surface 218.

As illustrated in Fig. 9, the first yoke 203 includes a gap 219 delimited by the first end surface 215-1 and the second end surface 215-2. The first end edge 217-1 and the second end edge 217-2 are located in a common second virtual plane 272 perpendicular to the first end surface 215-1 and the second end surface 215-2. The second virtual plane 272 is oriented in the x-direction and the γ-direction. The first upper surface 216-1 and the second upper surface 216-2 are located in the second virtual plane 272.

### First magnetic sensor

As illustrated in Fig. 9, the first magnetic sensor 204 is arranged in the middle, in the y direction, of the gap 219 located at the same distance from the first end surface 215-1 and the second end surface 215-2 in a plane (that is, a first virtual plane 271 in Fig. 8) along the section of Fig. 9. The first magnetic sensor 204 has a sensitivity direction parallel to the second virtual plane 272 (i.e., in the xy plane). The first magnetic sensor 204 detects a magnetic field in the sensitivity direction due to a current flowing through the first current path 202. The sensitivity of the first magnetic sensor 204 to a current flowing through the first current path 202 becomes maximum when the sensitivity direction is the y direction. In the present embodiment, it is assumed that the first magnetic sensor 204 has a sensitivity direction corresponding to the y direction, as an example.

### Second detection unit

As illustrated in Fig. 7, the second detection unit 251 includes a second current path 252, a second yoke 253, and a second magnetic sensor 254. The second magnetic sensor 254 arranged within the second yoke 253 detects the amount of a current flowing through the second current path 252 arranged within the second yoke 253.

### Second current path

The second current path 252 is a long plate member having flat surfaces in the xy plane and allows a current to pass therethrough substantially in the x direction. As illustrated in Fig. 9, the section of the second current path 252 in the yz plane has a substantially rectangular shape with their sides extending in the γ-direction and z-direction. The width in the y direction of the second current path 252 is larger than that in the z direction.

As illustrated in Fig. 7, the second current path 252 includes a first region 252-1, a second region 252-2, and a third region 252-3. The first region 252-1 to the third region 252-3 are arranged in the x1 direction in the order of the last digit of the reference numeral, and all extend substantially in the x direction. The x1-side end portion of the first region 252-1 is connected to the x2-side end portion of the second region 252-2. The x1-side end portion of the second region 252-2 is connected to the x2-side end portion of the third region 252-3. The second region 252-2 is displaced from the first region 252-1 and the third region 252-3 in the z1 direction.

As illustrated in Fig. 7, the second region 252-2 of the second current path 252 is displaced in the x2 direction from the second region 202-2 of the first current path 202. As illustrated in Fig. 9, when only the position in the z axis is noted, the second region 252-2 of the second current path 252 and the second region 202-2 of the first current path 202 are located at the same position. As illustrated in Fig. 7, when only the position in the z direction is considered, the first region 252-1 and the third region 252-3 of the second current path 252 are located at the same position as the first region 202-1 and the third region 202-3 of the first current path 202.

### Second yoke

As illustrated in Fig. 7, the shape of the second yoke 253 is the same as the shape of the first yoke 203. A front surface 261, a back surface 262, a first arm portion 263-1, a second arm portion 263-2, a connection portion 264, a first end surface 265-1, a second end surface 265-2, a bottom surface 265-3, a first upper surface 266-1, a second upper surface 266-2, a first end edge 267-1, a second end edge 267-2, an external surface 268, and a gap 269 of the second yoke 253 respectively correspond to the front surface 211, the back surface 212, the first arm portion 213-1, the second arm portion 213-2, the connection portion 214, the first end surface 215-1, the second end surface 215-2, the bottom surface 215-3, the first upper surface 216-1, the second upper surface 216-2, the first end edge 217-1, the second end edge 217-2, the external surface 218, and the gap 219 of the first yoke 203. The second yoke 253 is located at a position corresponding to the location of the first yoke 203 shifted in the xy plane.

### Second magnetic sensor

As illustrated in Fig. 9, the second magnetic sensor 254 is arranged, in a plane parallel to the yz planer (that is, a first virtual plane 273 in Fig. 8), in the middle of the gap 269 in the y direction located at the same distance from the first end surface 265-1 and the second end surface 265-2. The second magnetic sensor 254 has a sensitivity direction parallel to the second virtual plane 272 (that is, in the xy plane). The second magnetic sensor 254 detects a magnetic field, having the sensitivity direction, due to a current flowing through the second current path 252. The sensitivity of the second magnetic sensor 254 for a current flowing through the second current path 252 becomes maximum when the sensitivity direction is the y direction. In the present embodiment, it is assumed that the second magnetic sensor 254 has a sensitivity direction corresponding to the y direction, as an example.

The first virtual plane 273 of the second detection unit 251 illustrated in Fig. 8 corresponds to the first virtual plane 271 of the first detection unit 201 and is a plane parallel to the yz plane passing through the second current path 252, the second magnetic sensor 254, and the second yoke 253.

### Positional relationship

As illustrated in Fig. 7, the relative positional relationship among the third region 252-3 of the second current path 252, the second yoke 253, and the second magnetic sensor 254 is the same as the relative positional relationship among the first region 202-1 of the first current path 202, the first yoke 203, and the first magnetic sensor 204. The positions in the x direction of the first magnetic sensor 204 and the first yoke 203 included in the first detection unit 201 are displaced in the x direction with respect to those of the second magnetic sensor 254 and the second yoke 253 included in the second detection unit 251. As illustrated in Fig. 9, the first end edge 267-1 and the second end edge 267-2 of the second current path 252 are located in the second virtual plane 272 similarly to the first end edge 217-1 and the second end edge 217-2 of the first current path 202.

The second region 252-2 of the second current path 252 included in the second detection unit 251 is also called an adjacent current path for the first region 202-1 of the first current path 202 included in the first detection unit 201. The second region 252-2 of the second current path 252 is adjacent to the first region 202-1 of the first current path 202, and allows a current to flow therethrough in the x direction. The second region 202-2 of the first current path 202 included in the first detection unit 201 is also called an adjacent current path for the third region 252-3 of the second current path 252 included in the second detection unit 251. The second region 202-2 of the first current path 202 is adjacent to the third region 252-3 of the second current path 252 and allows a current to flow therethrough in the x direction.

As illustrated in Fig. 8, the adjacent current paths (the second region 252-2 of the second current path 252 and the second region 202-2 of the first current path 202) are arranged in the second virtual plane 272. The second region 252-2 of the second current path 252 as an adjacent current path has, in the first virtual plane 271, a line-symmetric rectangular sectional shape similarly to the section of the second current path 252 illustrated in Fig. 9. The second region 202-2 of the first current path 202 as an adjacent current path has, in the first virtual plane 273, a line-symmetric rectangular sectional shape similarly to the section of the first current path 202 illustrated in Fig. 9. In either of the cases, the axis of symmetry of the sectional shape (rectangle) of an adjacent current path is included in the second virtual plane 272.

### Magnetic lines of flux in second embodiment

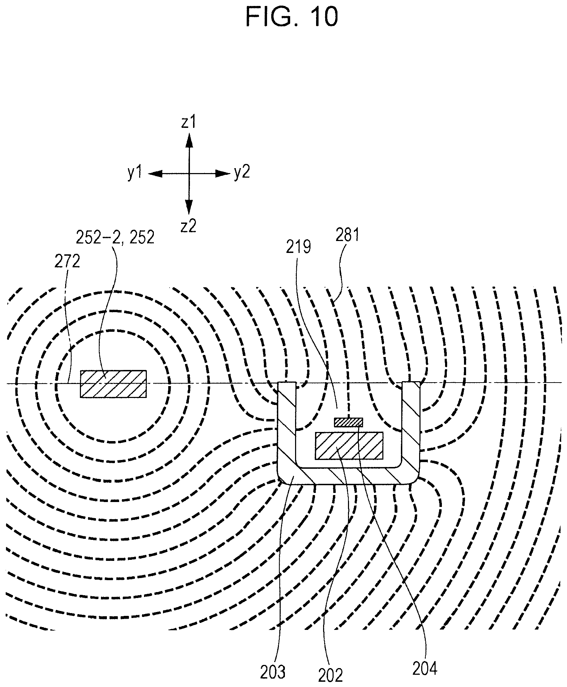

Fig. 10 is a diagram illustrating magnetic lines of flux in the first virtual plane 271 (Fig. 8) generated by a current flowing through the second region 252-2 of the second current path 252 as an adjacent current path. The magnetic lines of flux are illustrated using dotted lines. As has been described with reference to Fig. 9, the first end edge 217-1 and the second end edge 217-2 of the first current path 202 and the center, in the z direction, of the second region 252-2 of the second current path 252 are located in the second virtual plane 272.

As a result, the magnetic lines of flux illustrated in Fig. 10, within the gap 219, pass through the center, in the y direction, of the gap 219 and are substantially symmetric about a plane parallel to the xz plane. As illustrated by magnetic lines of flux 281, the magnetic lines of flux are oriented substantially in the z direction near the center, in the y direction, within the gap 219. In other words, the magnetic lines of flux near the first magnetic sensor 204 are oriented in a direction (z direction) substantially perpendicular to the sensitivity direction (y direction) of the first magnetic sensor 204. Hence, the first magnetic sensor 204 is unlikely to be influenced by a magnetic field due to an adjacent current path.

The relationship between the second detection unit 251 and the magnetic lines of flux generated by a current flowing through the second region 202-2 of the first current path 202 as an adjacent current path illustrated in Fig. 7 is similar to the relationship between the first detection unit 201 and the magnetic lines of flux generated by a current flowing through the second region 252-2 of the second current path 252.

### Magnetic lines of flux in comparative example of second embodiment

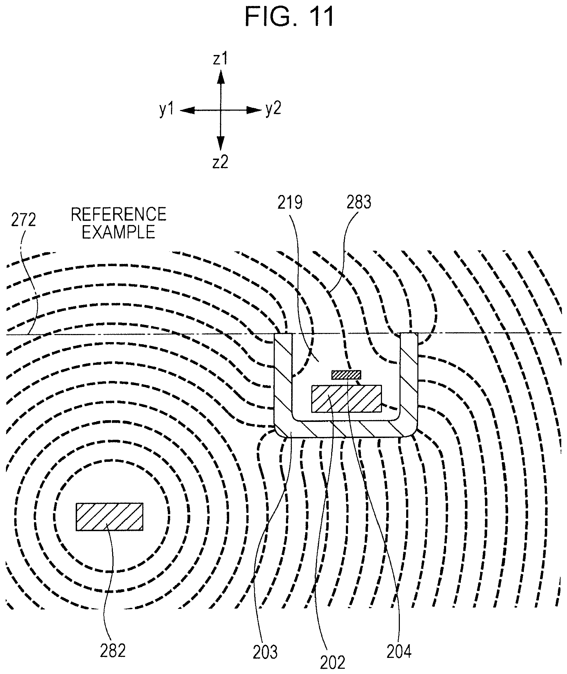

Fig. 11 is a diagram illustrating the magnetic lines of flux of a comparative example, generated in the first virtual plane 271 (Fig. 8) by a current flowing through an adjacent current path 282 obtained by shifting the second region 252-2 of the second current path 252 illustrated in Fig. 10 in the z2 direction. The magnetic lines of flux are represented using dotted lines. The adjacent current path 282 is displaced in the z2 direction from the second virtual plane 272.

As a result, within the gap 219, the magnetic lines of flux are not symmetric about a plane that is parallel to the xz plane and that passes through the center, in the y direction, of the gap 219. As illustrated by magnetic lines of flux 283, the magnetic lines of flux are not oriented in the z direction near the center, in the y direction, within the gap 219. In other words, magnetic lines of flux near the first magnetic sensor 204 are not substantially perpendicular to the sensitivity direction (y direction) of the first magnetic sensor 204. Hence, the first magnetic sensor 204 of the comparative example is likely to receive the influence of a magnetic field due to an adjacent current path, unlike the present embodiment.

### Relationship between position of adjacent current path and measured current

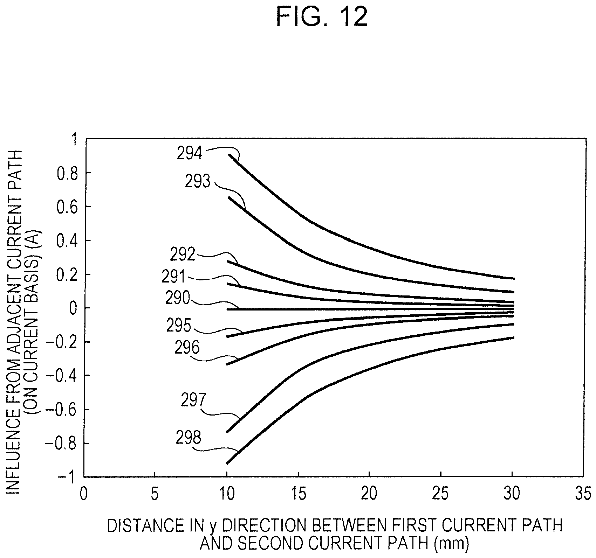

Fig. 12 is a graph illustrating the relationship between the position of an adjacent current path and influence from the adjacent current path. The horizontal axis represents a γ-direction distance between the second region 252-2 of the second current path 252 as an adjacent current path and the first region 202-1 of the first current path 202 illustrated in Fig. 9. The vertical axis represents the amount of a current due to the influence of the second current path 252 included in the amount of a current detected by the first magnetic sensor 204.

Curve 290 in Fig. 12 corresponds to the case where the second region 252-2 of the second current path 252 is located in the first virtual plane 271, as illustrated in Fig. 9. In the case of the curve 290, that is, according to the present embodiment, a current due to influence from the adjacent current path is substantially zero, irrespective of the distance in the y direction.

Curves 291, 292, 293, and 294 in Fig. 12 correspond to the case of the comparative example where the second region 252-2 of the second current path 252 in Fig. 9 is arranged in such a manner as to be displaced from the first virtual plane 271 in the z1 direction. In curves 291, 292, 293, and 294, the larger the reference numeral, the larger the distance between the first virtual plane 271 and the second region 252-2 of the second current path 252. In the z1 direction, the larger the distance between the first virtual plane 271 and the second region 252-2 of the second current path 252, the larger the influence of the second current path 252. In the y direction, the smaller the distance between the second region 252-2 of the second current path 252 and the first region 202-1 of the first current path 202, the larger the influence of the second current path 252.

curves 295, 296, 297, and 298 in Fig. 12 correspond to the comparative example in which the second region 252-2 of the second current path 252 in Fig. 9 is arranged in such a manner as to be displaced from the first virtual plane 271 in the z2 direction. In curves 295, 296, 297, and 298, the larger the reference numerals, the larger the distance between the first virtual plane 271 and the second region 252-2 of the second current path 252. In the z2 direction, the larger the distance between the first virtual plane 271 and the second region 252-2 of the second current path 252, the larger the influence of the second current path 252. In the γ-direction, the smaller the distance between the second region 252-2 of the second current path 252 and the first region 202-1 of the first current path 202, the larger the influence of the second current path 252.

### Summary

Also in the present embodiment, similarly to the first embodiment, in an induced magnetic field generated in the gap (219, 269) by a current flowing through an adjacent current path (the second region 252-2 of the second current path 252, the second region 202-2 of the first current path 202), magnetic field components in the sensitivity directions of the first magnetic sensor 204 and the second magnetic sensor 254 are decreased. Consequently, it becomes unlikely that an induced magnetic field due to a current of an adjacent current path is detected by the first magnetic sensor 204 or the second magnetic sensor 254 and, hence, the current detection accuracy is enhanced.

According to the present embodiment, adjacent current paths have line-symmetric sectional shapes respectively in the first virtual plane 271 and the first virtual plane 273, and the axes of symmetry of the line symmetry are included in the second virtual plane 272. Hence, induced magnetic fields generated by currents flowing through the adjacent current paths in the gaps 219 and 269 are approximately orthogonal to the sensitivity direction of the first magnetic sensor 204 and the second magnetic sensor 254. As a result, respective induced magnetic fields due to currents of adjacent current paths become unlikely to be detected by the first detection unit 204 and the second magnetic sensor 254.

According to the present embodiment, in each of the first magnetic sensor 204 and the second magnetic sensor 254 detecting the magnetic fields flowing through the first current path 202 and the second current path 252, it becomes unlikely that an induced magnetic field due to the current of an adjacent current path is detected, whereby current detection accuracy is enhanced. The positions of the first magnetic sensor 204 and the first yoke 203 included in the first detection unit 201 are respectively displaced in the x direction with respect to the second magnetic sensor 254 and the second yoke 253 included in the second detection unit 251 and, hence, it become easy to arrange the first current path 202 and the second current path 252 in such a manner that they are close to each other.

### Third embodiment

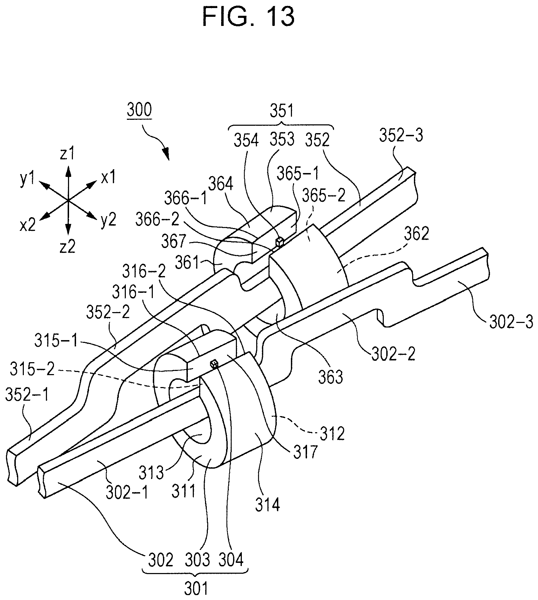

Next, a current sensor according to a third embodiment of the present invention will be described. Fig. 13 is a perspective view of a current sensor 300 of the present embodiment. Hereinafter, difference between the current sensor 100 (Fig. 1) of the first embodiment and the current sensor 300 (Fig. 13) of the present embodiment will be mainly described. In the current sensor 100 in Fig. 1 of the first embodiment, each configuration component is denoted by a reference numeral whose hundreds digit is 1. In the current sensor 300 in Fig. 13 of the third embodiment, each configuration component is denoted by a reference numeral whose hundreds digit is 3. Configuration components having the same reference numeral except for the hundreds digit represent similar configuration components.

The first current path 102 and the second current path 152 of the first embodiment (Fig. 1) are arranged substantially parallel to each other. On the other hand, a first current path 302 and a second current path 352 of the present embodiment are not parallel to each other. A first detection unit 301 of the present embodiment is arranged at a location corresponding to the location of the first detection unit 101 of the first embodiment (Fig. 1), which has been rotated slightly in the xy plane. A first end edge 316-1 and a second end edge 316-2 of the first current path 302 and a first end edge 366-1 and a second end edge 366-2 of the second current path 352 are all located in a virtual plane parallel to the xy plane.

Effects similar to those in the first embodiment are obtained also in the third embodiment.

The present invention is not limited to the embodiments described above. In other words, those skilled in the art may make various modifications, combinations, subcombinations, and replacements, with respect to the configuration components of the embodiments described above, within the technological scope or within the equivalent scope of the present invention.

The present invention can be applied to a current sensor detecting currents of a plurality of current paths adjacent to one another.

## Claims

1. A current sensor (100) comprising:
a current path (102) through which a current flows in a first direction;
an adjacent current path (152) arranged in such a manner as to be adjacent to the current path;
a first magnetic sensor (104) detecting a magnetic field due to the current flowing through the current path; and
a first yoke (103) having a sectional shape partially surrounding a periphery of the current path in a first virtual plane (171) perpendicular to the first direction,
wherein the first yoke includes a gap (117) delimited by two end surfaces (115-1, 115-2) parallel to each other,
wherein two end edges (116-1, 116-2) spaced furthest apart from the current path at the two end surfaces are located in a common second virtual plane (172) perpendicular to the two end surfaces (115-1, 115-2),
wherein the first magnetic sensor (104) is arranged in the gap (117) and has a sensitivity direction parallel to the second virtual plane (172), and
wherein the adjacent current path is arranged in the second virtual plane (172).

2. The current sensor according to claim 1, wherein the first magnetic sensor is arranged in a middle of the gap in such a manner as to be located at the same distance from the two end surfaces in the first virtual plane.

3. The current sensor according to Claim 1 or 2, wherein a current flows through the adjacent current path in the first direction.

4. The current sensor according to one of Claim 1 to Claim 3, wherein the adjacent current path has a line-symmetric sectional shape in the first virtual plane and an axis of symmetry of the sectional shape is included in the second virtual plane.

5. The current sensor according to one of Claim 1 to Claim 4, wherein the sectional shape of the first yoke is a ring cut out at the gap.

6. The current sensor according to any one of Claim 1 to Claim 4, wherein the first yoke includes two plate-shaped arm portions extending parallel to each other with the current path sandwiched therebetween and a connection portion connecting respective first ends of the two arm portions to each other,
wherein the arm portions respectively form the end surfaces, on sides thereof facing the current path, and
wherein the connection portion forms a bottom surface perpendicular to the end surfaces, on a side thereof facing the current path.

7. The current sensor according to any one of Claim 1 to Claim 6,
wherein the current path, in the first virtual plane, has a flat sectional shape extending in a second direction perpendicular to the end surface of the gap, and
wherein a position of a center, in the second direction, of the sectional shape of the current path is displaced from a position, in the second direction, of the first magnetic sensor.

8. The current sensor according to any one of Claim 1 to Claim 7, further comprising:
a second magnetic sensor (154) detecting a magnetic field due to the current flowing through the adjacent current path; and
a second yoke (153) having a sectional shape partially surrounding a periphery of the adjacent current path,
wherein the second yoke includes a gap delimited by two end surfaces parallel to each other,
wherein two end edges most spaced apart from the second current path at the two end surfaces of the second yoke are located in the second virtual plane,
wherein the second magnetic sensor is arranged in the gap and has a sensitivity direction parallel to the second virtual plane,
wherein the second magnetic sensor and the second yoke are displaced in the first direction from the first magnetic sensor and the first yoke, and
wherein at positions adjacent to the second magnetic sensor and the second yoke, the current path and the adjacent current path curve such that the current path is arranged in the second virtual plane.

## Patentansprüche

1. Stromsensor (100), aufweisend:
einen Strompfad (102), über den ein Strom in einer ersten Richtung fließt;
einen benachbarten Strompfad (152), der derart angeordnet ist, dass er dem Strompfad benachbart ist;
einen ersten Magnetsensor (104), der ein Magnetfeld aufgrund des über den Strompfad fließenden Stroms erfasst; und
ein erstes Joch (103) mit einer Querschnittsform, die eine Peripherie des Strompfades in einer ersten virtuellen Ebene (171), die zu der ersten Richtung rechtwinklig ist, teilweise umgibt,
wobei das erste Joch einen Spalt (117) aufweist, der durch zwei zueinander parallele Endflächen (115-1, 115-2) begrenzt ist,
wobei zwei Endränder (116-1, 116-2), die an den beiden Endflächen am weitesten von dem Strompfad beabstandet sind, sich in einer gemeinsamen zweiten virtuellen Ebene (172) befinden, die rechtwinklig zu den beiden Endflächen (115-1, 115-2) ist,
wobei der erste Magnetsensor (104) in dem Spalt (117) angeordnet ist und eine Empfindlichkeitsrichtung parallel zu der zweiten virtuellen Ebene (172) aufweist, und
wobei der benachbarte Strompfad in der zweiten virtuellen Ebene (172) angeordnet ist.

2. Stromsensor nach Anspruch 1,
wobei der erste Magnetsensor in der Mitte des Spalts derart angeordnet ist, dass er sich in dem gleichen Abstand von den beiden Endflächen in der ersten virtuellen Ebene befindet.

3. Stromsensor nach Anspruch 1 oder 2,
wobei ein Strom über den benachbarten Strompfad in der ersten Richtung fließt.

4. Stromsensor nach einem der Ansprüche 1 bis 3,
wobei der benachbarte Strompfad eine liniensymmetrische Querschnittsform in der ersten virtuellen Ebene aufweist und eine Symmetrieachse der Querschnittsform in der zweiten virtuellen Ebene enthalten ist.

5. Stromsensor nach einem der Ansprüche 1 bis 4,
wobei die Querschnittsform des ersten Jochs ein Ring ist, der an dem Spalt ausgeschnitten ist.

6. Stromsensor nach einem der Ansprüche 1 bis 4,
wobei das erste Joch zwei plattenförmige Armbereiche aufweist, die sich parallel zueinander erstrecken, wobei der Strompfad sandwichartig dazwischen angeordnet ist, sowie einen Verbindungsbereich aufweist, der jeweilige erste Enden der beiden Armbereiche miteinander verbindet,
wobei die Armbereiche an ihren dem Strompfad zugewandten Seiten jeweils die Endflächen bilden, und
wobei der Verbindungsbereich auf einer dem Strompfad zugewandten Seite eine zu den Endflächen rechtwinklige Bodenfläche bildet.

7. Stromsensor nach einem der Ansprüche 1 bis 6,
wobei der Strompfad in der ersten virtuellen Ebene eine flache Querschnittsform aufweist, die sich in einer zu der Endfläche des Spalts rechtwinkligen zweiten Richtung erstreckt, und
wobei eine Position eines Zentrums in der zweiten Richtung der Querschnittsform des Strompfades von einer Position des ersten Magnetsensors in der zweiten Richtung verlagert ist.

8. Stromsensor nach einem der Ansprüche 1 bis 7,
ferner aufweisend:
einen zweiten Magnetsensor (154), der ein Magnetfeld aufgrund des über den benachbarten Strompfad fließenden Stroms erfasst; und
ein zweites Joch (153) mit einer Querschnittsform, die eine Peripherie des benachbarten Strompfades teilweise umgibt,
wobei das zweite Joch einen Spalt aufweist, der durch zwei zueinander parallele Endflächen begrenzt ist,
wobei zwei am weitesten von dem zweiten Strompfad beabstandete Endränder an den beiden Endflächen des zweiten Jochs sich in der zweiten virtuellen Ebene befinden,
wobei der zweite Magnetsensor in dem Spalt angeordnet ist und eine Empfindlichkeitsrichtung parallel zu der zweiten virtuellen Ebene aufweist,
wobei der zweite Magnetsensor und das zweite Joch von dem ersten Magnetsensor und dem ersten Joch in der ersten Richtung verlagert sind, und
wobei an Positionen benachbart dem zweiten Magnetsensor und dem zweiten Joch der Strompfad und der benachbarte Strompfad derart gekrümmt sind, dass der Strompfad in der zweiten virtuellen Ebene angeordnet ist.

## Revendications

1. Capteur de courant (100) comprenant :
un chemin de courant (102) à travers lequel circule un courant dans une première direction ;
un chemin de courant adjacent (152) disposé d'une manière telle qu'il est adjacent au chemin de courant ;
un premier capteur magnétique (104) qui détecte un champ magnétique imputable au courant qui circule à travers le chemin de courant ; et
une première culasse (103) dont la configuration en section transversale entoure en partie une périphérie du chemin de courant dans un premier plan virtuel (171) perpendiculaire à la première direction ;
dans lequel la première culasse englobe un entrefer (117) délimité par deux surfaces terminales (115-1, 115-2) parallèles l'une à l'autre ;
dans lequel deux bords terminaux (116-1, 116-2) les plus éloignés du chemin de courant aux deux surfaces terminales sont situés dans un second plan virtuel commun (172) perpendiculaire aux deux surfaces terminales (115-1, 115-2) ;
dans lequel le premier capteur magnétique (104) est disposé dans l'entrefer (117) et possède une direction de sensibilité parallèle au second plan virtuel (172) ; et
dans lequel le chemin de courant adjacent est disposé dans le second plan virtuel (172).

2. Capteur de courant selon la revendication 1, dans lequel le premier capteur magnétique est disposé au centre de l'entrefer d'une manière telle qu'il est situé à la même distance des deux surfaces terminales dans le premier plan virtuel.

3. Capteur de courant selon la revendication 1 ou 2, dans lequel un courant circule à travers le chemin de courant adjacent, dans la première direction.

4. Capteur de courant selon l'une quelconque des revendications 1 à 3, dans lequel le chemin de courant adjacent possède une configuration en section transversale du type à symétrie linéaire dans le premier plan virtuel et un axe de symétrie de la configuration en section transversale est inclus dans le second plan virtuel.

5. Capteur de courant selon l'une quelconque des revendications 1 à 4, dans lequel la configuration de la première culasse en section transversale est celle d'un anneau découpé à l'entrefer.

6. Capteur de courant selon l'une quelconque des revendications 1 à 4, dans lequel la première culasse englobe deux portions faisant office de bras en forme de plaques, qui s'étendent parallèlement l'une à l'autre, le chemin de courant étant intercalé entre les deux, et une portion de liaison qui relie l'une à l'autre des premières extrémités respectives des deux portions faisant face de bras ;
dans lequel les portions faisant office de bras forment respectivement les surfaces terminales sur leurs côtés tournés vers le chemin de courant ; et
dans lequel la portion de liaison forme une surface de base perpendiculaire aux surfaces terminales, sur un de leurs côtés tourné vers le chemin de courant.

7. Capteur de courant selon l'une quelconque des revendications 1 à 6, dans lequel
le chemin de courant, dans le premier plan virtuel, possède une configuration de forme plate en section transversale qui s'étend dans une seconde direction perpendiculaire à la surface terminale de l'entrefer ; et
dans lequel une position d'un centre, dans la seconde direction, de la configuration du chemin de courant en section transversale, est décalée par rapport à une position, dans la seconde direction, du premier capteur magnétique.

8. Capteur de courant selon l'une quelconque des revendications 1 à 7, comprenant en outre :
un second capteur magnétique (154) qui détecte un champ magnétique imputable au courant qui circule à travers le chemin de courant adjacent ; et
une seconde culasse (153) possédant une configuration en section transversale qui entoure en partie une périphérie du chemin de courant adjacent ;
dans lequel la seconde culasse englobe un entrefer délimité par deux surfaces terminales parallèles l'une à l'autre ;
dans lequel deux bords terminaux les plus éloignés du second chemin de courant aux deux surfaces terminales de la seconde culasse sont disposés dans le second plan virtuel ;
dans lequel le second capteur magnétique est disposé dans l'entrefer et possède une direction de sensibilité parallèle au second plan virtuel ;
dans lequel le second capteur magnétique et la seconde culasse sont décalés dans la première direction par rapport au premier capteur magnétique et à la première culasse ;
dans lequel à des positions adjacentes au second capteur magnétique et la seconde culasse, le chemin de courant et le chemin de courant adjacent s'incurvent d'une manière telle que le chemin de courant est disposé dans le second plan virtuel.
